# EUROPÄISCHE PATENTANMELDUNG

(11) **EP 0 869 029 A2**
(43) Veröffentlichungstag der Anmeldung: **07.10.1998**
(21) Anmeldenummer: 98105411.7
(22) Anmeldetag: 25.03.1998
(51) Int. Cl.: B60L 5/19

(54) **Stromabnehmer für ein Schienenfahrzeug**

(30) Priorität: 03.04.1997 DE 19713816
(71) Anmelder: SIEMENS AKTIENGESELLSCHAFT, 80333 München (DE)
(72) Erfinder: Düll, Hans-Jürgen, Dipl.-Ing., 91094 Langensendelbach (DE)

(57) **Zusammenfassung**

Schienenfahrzeug mit wenigstens einem neigbaren Wagenkasten (1), auf dessen Dach (2) ein Stromabnehmer (3) entgegen der Neigung des Wagenkastens (1) rückführbar ist, wobei der Stromabnehmer (3) mit seinem Träger (4) über Stützisolatoren (5) auf dem ebenen Dach (2) des Wagenkastens (1) abgestützt ist und der tiefste unter elektrischer Spannung stehende Teil (4) des Stromabnehmers (3) eine Mindestluftstrecke (L) zum Dach (2) des Wagenkastens (1) beabstandet ist, wobei die Anordnung der Stützisolatoren (5) sowie ihre Form und Länge derart gewählt ist, daß die daraus resultierende elektrische Kriechstrecke (K) zwischen dem Träger (4) des Stromabnehmers (3) und dem Dach (2) des Wagenkastens (1) größer ist als die Mindestluftstrecke (L) und gleichzeitig der im wesentlichen senkrecht zum Dach (2) des Wagenkastens (1) gemessene Isolationsabstand (A) zwischen dem tiefsten unter elektrischer Spannung stehenden Teil (4) des Stromabnehmers (3) und den unteren Enden der Stützisolatoren (5) kleiner ist als die Mindestluftstrecke (L).

## Beschreibung

Die Erfindung betrifft ein Schienenfahrzeug.

Ein derartiges Schienenfahrzeug, das wenigstens einen neigbaren Wagenkasten umfaßt, wird in der deutschen Patentanmeldung mit dem Aktenzeichen 196 14 554.6 vorgeschlagen. Auf dem Dach des Wagenkastens ist in diesem Fall ein Stromabnehmer angeordnet, der entgegen der Neigung des Wagenkastens rückführbar ist. Um das Lichtraumprofil der zu befahrenden Strecke nicht zu verletzen, ist das Dach des Wagenkastens im Bereich des Stromabnehmers gegenüber dem verbleibenden Bereich des Daches abgesenkt. Damit ergibt sich bei Fahrzeugen mit Neigetechnik und Stromabnahme über Fahrdraht im Fahrgastraum eine entsprechend reduzierte Innenraumhöhe.

Aufgabe der vorliegenden Erfindung ist es, ein Schienenfahrzeug der eingangs genannten Art zu schaffen, das trotz seines neigbaren Stromabnehmers einerseits hinsichtlich der konstruktiven Gestaltung des Wagenkastens keinen Einschränkungen unterliegt und andererseits das Lichtraumprofil der zu befahrenden Strecken nicht verletzt.

Die Aufgabe wird erfindungsgemäß durch Anspruch 1 gelöst. Vorteilhafte Ausgestaltungen der Erfindung sind jeweils Gegenstand von weiteren Ansprüchen.

Das erfindungsgemäße Schienenfahrzeug umfaßt Wenigstens einen Wagenkasten, auf dessen Dach ein Stromabnehmer entgegen der Neigung des Wagenkastens rückführbar ist, wobei der Stromabnehmer mit seinem Träger über Stützisolatoren auf dem ebenen Dach des Wagenkastens abgestützt ist. Der Begriff "eben" bedeutet in diesem Zusammenhang, daß das Dach des Wagenkastens im wesentlichen parallel zum Fußboden des Wagenkastens verläuft. Der tiefste unter elektrischer Spannung stehende Teil des Stromabnehmers ist eine Mindestluftstrecke zum Dach des Wagenkastens beabstandet. Bei dem tiefsten unter elektrischer Spannung stehenden Teil des Stromabnehmers handelt es sich im allgemeinen um den Träger des Stromabnehmers. Bildet jedoch ein anderer Teil des Stromabnehmers, wie z. B. Stellantrieb oder Gestänge, den tiefsten unter elektrischer Spannung stehenden Teil, dann ist die Mindestluftstrecke von diesem Teil aus festzulegen. Die Mindestluftstrecke ist in allen Fällen im wesentlichen senkrecht zum Dach des Wagenkastens zu messen.

Weiterhin ist bei dem Schienenfahrzeug nach Anspruch 1 die Anordnung der Stützisolatoren sowie ihre Form und Länge derart gewählt, daß die daraus resultierende elektrische Kriechstrecke zwischen dem Träger des Stromabnehmers und dem Dach des Wagenkastens größer ist als die Mindestluftstrecke. Gleichzeitig ist der im wesentlichen senkrecht zum Dach des Wagenkastens gemessene Isolationsabstand zwischen dem tiefsten unter elektrischer Spannung stehenden Teil des Stromabnehmers und den unteren Enden der Stützisolatoren kleiner als die Mindestluftstrecke.

Die elektrische Kriechstrecke kann durch die Veränderung des Durchmessers und/oder der Form der Stützisolatoren an die erforderlichen Gegebenheiten angepaßt werden. Eine besonders wirkungsvolle Verlängerung der elektrischen Kriechstrecke kann durch eine schräge Anordnung der Stützisolatoren zum Dach des Wagenkastens erreicht werden (Anspruch 6). Zur Gewichtsreduzierung ist es auch möglich, die Stützisolatoren als Hohlkörper auszubilden. Die erfindungsgemäße Anordnung des Stromabnehmers auf dem Dach des Wagenkastens ist für alle Arten von Stromabnehmern geeignet.

Im allgemeinen ist bei einem Schienenfahrzeug, bei dem das Dach des Wagenkastens geerdet ist (Anspruch 4), die Isolation durch die Stützisolatoren ausreichend. Zur Verbesserung der Isolation kann es für bestimmte Anwendungsfälle jedoch vorteilhaft sein, das Dach des Wagenkastens aus einem isolierenden Werkstoff herzustellen (Anspruch 5) und/oder Lagerkonsolen aus einem isolierenden Material zu verwenden (Anspruch 12) und/oder die Lager aus einem isolierenden Material herzustellen (Anspruch 14).

Weitere Vorteile und Einzelheiten der Erfindung ergeben sich aus der nachfolgenden Beschreibung von Ausführungsbeispielen, anhand der Zeichnung und in Verbindung mit den weiteren Ansprüchen. Es zeigen:
- FIG 1: einen Querschnitt einer ersten Ausführungsform des erfindungsgemäßen Schienenfahrzeugs im Bereich des Daches,
- FIG 2: eine Seitenansicht einer zweiten Ausführungsform des erfindungsgemäßen Schienenfahrzeugs,
- FIG 3: eine Draufsicht auf den Stromabnehmer gemäß FIG 2,
- FIG 4: eine Draufsicht auf einen Stromabnehmer, der bei einer dritten Ausführungsform des erfindungsgemäßen Schienenfahrzeugs Verwendung findet.

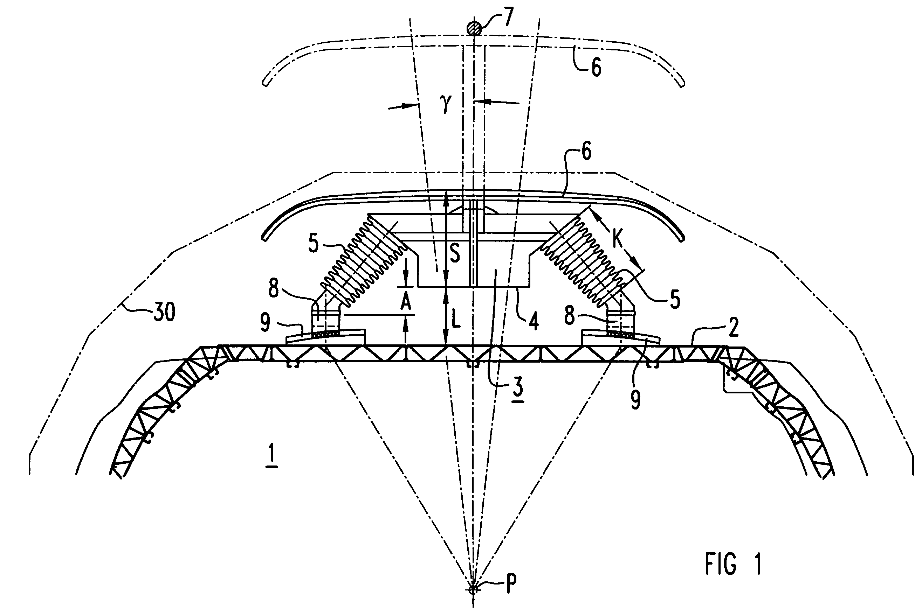

In FIG 1 ist mit 1 ein Wagenkasten eines Schienenfahrzeugs bezeichnet, der um einen Neigepol N um einen Neigewinkel γ neigbar ist. Auf dem Dach 2 des Wagenkastens 1 ist ein Stromabnehmer 3 angeordnet, der entgegen der Neigung des Wagenkastens 1 rückführbar ist. Der Stromabnehmer 3 ist mit seinem Träger 4 über Stützisolatoren 5 auf dem ebenen Dach 2 des Wagenkastens 1 abgestützt. Der tiefste unter elektrischer Spannung stehende Teil des Stromabnehmers 3 ist eine Mindestluftstrecke L zum Dach 2 des Wagenkastens 1 beabstandet. Im dargestellten Ausführungsbeispiel ist der tiefste unter elektrischer Spannung stehende Teil des Stromabnehmers 3 der Träger 4 des Stromabnehmers 3.

In FIG 1 ist der abgesenkte Zustand des Stromabnehmers 1 bei nicht geneigtem Wagenkasten 1 gezeigt. Der ausgefahrene Zustand des Stromabnehmers 3 - die Schleifleiste 6 des Stromabnehmers 3 liegt am Fahrdraht 7 an - ist ebenso wie die geneigte Position des Wagenkastens 1 strichpunktiert eingezeichnet.

Die Anordnung der Stützisolatoren 5 sowie ihre Form und Länge ist derart gewählt, daß die daraus resultierende elektrische Kriechstrecke K zwischen dem Träger 4 des Stromabnehmers 3 und dem Dach 2 des Wagenkastens 1 größer ist als die Mindestluftstrecke L. Gleichzeitig ist der im wesentlichen senkrecht zum Dach 2 des Wagenkastens 1 gemessene Isolationsabstand A zwischen dem tiefsten unter elektrischer Spannung stehenden Teil des Stromabnehmers 3, im dargestellten Ausführungsbeispiel der Träger 4 des Stromabnehmers 3, und den unteren Enden der Stützisolatoren 5 kleiner als die Mindestluftstrecke L. Die Mindestluftstrecke L ist hierbei im wesentlichen senkrecht zum Dach 2 des Wagenkastens 1 zu messen.

Bei dem in FIG 1 dargestellten Ausführungsbeispiel erhält man durch die schräge Anordnung der Stützisolatoren 5 zum Dach 2 des Wagenkastens 1 eine besonders große Kriechstrecke K und damit auch bei starker Verschmutzung der Stütsisolatoren 5 eine gute Isolation.

Bei der in FIG 1 gezeigten Anordnung stützt sich der unter elektrischer Spannung stehende Träger 4 des Stromabnehmers 3 über mindestens zwei Stützisolatoren 5 und metallische, geerdete Lagerkonsolen 8 auf Lager 9 ab. Die Lagerkonsolen 8 sind in den Lagern 9 derart schwenkbar gelagert, daß der Stromabnehmer 3 Schwenkbewegungen um angenähert den Neigepol P des Wagenkastens 1 ausführen kann.

Die ausschlaggebende Bauhöhe H des abgesenkten Stromabnehmers 3 setzt sich zusammen aus der Mindesthöhe S des Stromabnehmers 3 und der zulässigen Mindestluftstrecke L.

Das ebene Dach 2 des Wagenkastens 1 ist im Bereich der Mindestluftstrecke L gegenüber dem verbleibenden Bereich des Daches 2 nicht abgesenkt. Damit unterliegt das erfindungsgemäße Schienenfahrzeug hinsichtlich der konstruktiven Gestaltung des Wagenkastens 1 keinen Einschränkungen.

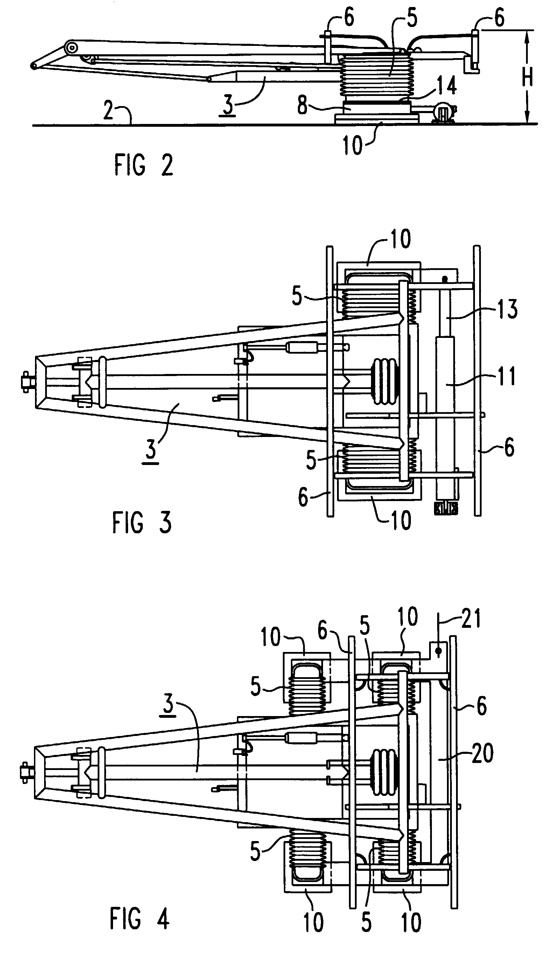

Bei dem in FIG 2 und 3 gezeigten Ausführungsbeispiel ist der Stromabnehmer 3 als Einholm-Stromabnehmer ausgebildet. Der Stromabnehmer 3 stützt sich über zwei Stützisolatoren 5 und zwei Lagerkonsolen 8 auf die am Dach 2 des Wagenkastens 1 befestigten Rollenlager 10 ab. Ein Stellantrieb 11 hält den Stromabnehmer 3 in Abhängigkeit vom Neigewinkel γ des Wagenkastens 1 zum Fahrdraht 7 (FIG 1) zentriert.

Der Stellantrieb 11 enthält für beide Auslenkmöglichkeiten des Stromabnehmers 3 jeweils wenigstens eine Rückholfeder 13, durch die der Träger 4 des Stromabnehmers 3 in der Fahrzeugmitte fixierbar ist.

Wie aus FIG 3 ersichtlich ist, liegen die Rollenlager 10 und der Stellantrieb 11 innerhalb der Außenkontur des Stromabnehmers 3.

In vorteilhafter Weise sind bei der in FIG 2 und 3 gezeigten Ausgestaltung zwischen den Lagerkonsolen 8 und den Stützisolatoren 5 elastische Elemente 14 angeordnet, durch die der Körperschall unterbrochen wird.

Bei der Anordnung gemäß FIG 4 stützt sich der Stromabnehmer 3 über vier Stützisolatoren 5 auf eine U-förmige Lagerkonsole 20 ab, die wiederum über Rollenlager 10 mit dem Dach 2 des Wagenkastens 1 verbunden ist. Die U-förmige Lagerkonsole 20 ist im dargestellten Ausführungsbeispiel über ein Gestänge 21 mit einem nicht dargestellten Stellantrieb bzw. mit einem Fahrwerk des Wagenkastens 1, insbesondere mit einer Wiege eines Drehgestells, verbunden. Anstelle des Gestänges 21 kann bei der in FIG 4 gezeigten Ausführungsform der Stromabnehmer 3 auch direkt mit einem Stellantrieb verbunden sein. Zur Wahrung der Luftstrecke L weist der Stromabnehmer 3 dann im Bereich des Stellantriebes entsprechende Aussparungen auf.

## Patentansprüche

1. Schienenfahrzeug, das folgende Merkmale umfaßt:
- wenigstens einen neigbaren Wagenkasten (1), auf dessen Dach (2) ein Stromabnehmer (3) entgegen der Neigung des Wagenkastens (1) rückführbar ist, wobei
- der Stromabnehmer (3) mit seinem Träger (4) über Stützisolatoren (5) auf dem ebenen Dach (2) des Wagenkastens (1) abgestützt ist und
- der tiefste unter elektrischer Spannung stehende Teil (4) des Stromabnehmers (3) eine Mindestluftstrecke (L) zum Dach (2) des Wagenkastens (1) beabstandet ist, wobei
- die Anordnung der Stützisolatoren (5) sowie ihre Form und Länge derart gewählt ist, daß die daraus resultierende elektrische Kriechstrecke (K) zwischen dem Träger (4) des Stromabnehmers (3) und dem Dach (2) des Wagenkastens (1) größer ist als die Mindestluftstrecke (L) und gleichzeitig
- der im wesentlichen senkrecht zum Dach (2) des Wagenkastens (1) gemessene Isolationsabstand (A) zwischen dem tiefsten unter elektrischer Spannung stehenden Teil (4) des Stromabnehmers (3) und den unteren Enden der Stützisolatoren (5) kleiner ist als die Mindestluftstrecke (L).

2. Schienenfahrzeug nach Anspruch 1, mit folgenden Merkmalen:
- die Stützisolatoren (5) stützen sich jeweils über eine Lagerkonsole(8) auf jeweils einem Lager (9, 10) ab, das auf dem Dach (2) des Wagenkastens (1) angeordnet ist, wobei
- die Lager (9, 10) eine Schwenkbewegung des Stromabnehmers (3) um angenähert den Neigepol (P) des Wagenkastens (1) erlauben.

3. Schienenfahrzeug nach Anspruch 2, mit folgendem Merkmal:
- die Stützisolatoren (5), die Lager (9) und die Schleifleisten (6) des abgesenkten Stromabnehmers (3) sind innerhalb des Lichtraumprofils (30) des Schienenfahrzeugs angeordnet.

4. Schienenfahrzeug nach Anspruch 1, mit folgendem Merkmal:
- das Dach (2) des Wagenkastens (1) ist geerdet.

5. Schienenfahrzeug nach Anspruch 1, mit folgendem Merkmal:
- das Dach (2) des Wagenkastens (1) ist aus elektrisch isolierendem Material.

6. Schienenfahrzeug nach Anspruch 1, mit folgendem Merkmal:
- die Stützisolatoren (5) sind schräg zum Dach (2) des Wagenkastens (1) angeordnet.

7. Schienenfahrzeug nach Anspruch 2, mit folgendem Merkmal:
- die Lager (9) sind innerhalb der Außenkontur des Stromabnehmers (3) angeordnet.

8. Schienenfahrzeug nach Anspruch 1, mit folgendem Merkmal:
- der Stromabnehmer (3) ist in Abhängigkeit des Neigewinkels (γ) des Wagenkastens (1) zur Fahrdrahtebene (12) durch einen Stellantrieb (11) zentrierbar.

9. Schienenfahrzeug nach Anspruch 1, mit folgendem Merkmal:
- der Stromabnehmer (3) ist in Abhängigkeit des Neigewinkels (γ) des Wagenkastens (1) zum Fahrdraht (7) durch ein Gestänge (21) zentrierbar, das mit dem Fahrwerk des Wagenkastens (1), insbesondere mit einer Wiege eines Drehgestells, verbunden ist.

10. Schienenfahrzeug nach Anspruch 1, mit folgendem Merkmal:
- der Stromabnehmer (3) ist in Abhängigkeit des Neigewinkels (γ) des Wagenkastens (1) zum Fahrdraht (7) durch einen Seilzug zentrierbar, der mit dem Fahrwerk des Wagenkastens (1), insbesondere mit einer Wiege eines Drehgestells, verbunden ist.

11. Schienenfahrzeug nach Anspruch 8, mit folgendem Merkmal:
- der Stellantrieb ist innerhalb der Außenkontur des Stromabnehmers (3) angeordnet.

12. Schienenfahrzeug nach Anspruch 1, mit folgendem Merkmal:
- die Stützisolatoren (5) stützen sich über eine in Umfangsrichtung U-förmig ausgebildete Lagerkonsole(8) auf wenigstens einem Lager (9, 10) ab, das auf dem Dach (2) des Wagenkastens (1) angeordnet ist.

13. Schienenfahrzeug nach Anspruch 2 oder 12, mit folgendem Merkmal:
- die Lagerkonsolen (8, 20) sind aus elektrisch isolierendem Material.

14. Schienenfahrzeug nach Anspruch 2, mit folgendem Merkmal:
- die Lager (9, 10) sind aus elektrisch isolierendem Material.

15. Schienenfahrzeug nach Anspruch 8, mit folgendem Merkmal:
- der Stellantrieb (11) enthält für beide Auslenkmöglichkeiten des Stromabnehmers (3) jeweils wenigstens eine Rückholfeder (13), durch die der Träger (4) des Stromabnehmers (3)in der Fahrzeugmitte fixierbar ist.
